# EUROPEAN PATENT SPECIFICATION

(11) **EP 0 812 905 B1**
(45) Date of publication and mention of the grant of the patent: **03.09.2003**
(21) Application number: 97304019.9
(22) Date of filing: 10.06.1997
(51) Int. Cl.: C11D 3/37, C11D 17/00

(54) **Detergent tablets**
Reinigungsmitteltabletten
Comprimés détergents

(30) Priority: 14.06.1996 FR 9607460
(43) Date of publication of application: 17.12.1997
(73) Proprietor: ROHM AND HAAS COMPANY, Philadelphia, Pennsylvania 19106-2399 (US)
(72) Inventor: Duccini, Yves, 60000 Beauvais (FR); Reeve, Paul Francis David, 06560 Valbonne (FR); Jones, Charles Elwood, Yardley, PA 19067 (US); Gauthier, Francois, 60550 Verneuil en Halatte (FR)
(74) Representative: Buckley, Guy Julian

(56) References cited:
- EP-A- 0 504 091
- EP-A- 0 522 766
- WO-A-95/20030

## Description

The present invention relates to detergent tablets and bars, and more specifically to tablets and bars of detergents which contain high levels of non-phosphate ingredients.

In the past, phosphates have been used in detergents generally to avoid calcium salt precipitation. Detergents containing phosphates could be made with the same formulation in both powder and tablet form, because phosphates impart good tabletising properties. However nowadays phosphates are generally used in detergents either at very low levels or not at all, and instead other builders such as zeolite, citrates, silicates, layered silicates, disilicates are employed. These builders are generally available in powder or granular form, and can easily be dry mixed or granulated in powdered detergent formulations. However their granulometry and other physical properties are such that tabletising the powder formulation is very difficult. Hence in order to tabletise such formulations, it has generally been necessary to reformulate the detergent, or to add binding agents to the powder before tabletising.

Examples of such binding agents include fatty alcohols or fatty acids such as lauryl alcohol or stearic acid. For example GB 989683A discloses coating a detergent tablet with a water-soluble film-forming polymer such as polyvinyl alcohol. However they are generally difficult to use because they are solids at room temperature, and also reduce the dissolution rate of the tablet, which is undesirable in a detergent.

Other binders used include sodium salts of homo- or copolymeric (meth)acrylic-acid, as disclosed in EP 579659A, which are agglomerated with the other components of the detergent, the agglomerate then being dried and tableted. Tablets produced with such binders have improved physical and solubilization properties; however these properties are still capable of improvement to be comparable with those of tablets which do contain phosphate builders for example.

To manufacture bar or tablet detergents extrusion is often used, and manufacturers frequently experience difficulties in maintaining satisfactory mechanical resistance in the bars, which often break during production, handling or storage.

An alternative to incorporating binders within a formulation to be tableted is to tablet the formulation and then coat the tablet with a compound which will improve its resistance to breakage and rapid dissolution. However tablets which have only an external coating of such a material tend to dissolve too rapidly once the outer coating has been removed during the wash, which results in inferior washing results. Furthermore, coating a preformed tablet is of course an extra step in the manufacturing process, which is not preferred. GB 2040980 discloses coating a detergent tablet with polyoxyalkylene nonionic surfactants, although in this case the coating is present for its surfactant properties.

Thus there is a need for a detergent tablet containing high levels of non-phosphate builder which has suitably robust physical properties, particularly which is non crumbling and non dusting, which can be manufactured economically, and which provides detergency results as good as or better than existing tablets. We have discovered that such a tablet can be achieved by tableting a particulate detergent formulation which has been pre-mixed with a particular range of polymeric binders, such that the binder material is incorporated throughout the tablet, rather than only on the surface.

Accordingly in one aspect the present invention provides a detergent tablet which comprises at least 50 wt% of a non-phosphate builder and from 0 to 20 wt% of a phosphate builder, having incorporated therein as a binder from 0.3 to 5 wt% of a neutralised polymer of hydrophilic or hydrophobic monomers which has a glass transition temperature (Tg) of from 40 to 120°C, which monomers comprise (meth)acrylic acid, maleic anhydride, hydroxyalkyl(meth)acrylic acids, alkyl (meth)acrylates, alkylhydroxy (meth)acrylates, alkyl (meth)acrylic acids, or styrene, the polymer having a weight average molecular weight of from 25,000 to 95,000. By "incorporated therein" we mean that the binder is distributed throughout the body of the tablet, and is not just a coating on the surface.

The inorganic builder preferably comprises silicates, disilicates, zeolite, carbonates, bicarbonates. Other organic chelants such as citrates may also be employed.

A further aspect of the invention provides a process for producing a detergent tablet which comprises the steps of a) agglomerating a composition comprising at least 50 wt% of a non-phosphate builder and from 0 to 20 wt% of a phosphate builder, and from 0.3 to 5 wt% of a neutralised polymer of hydrophilic or hydrophobic monomers which has a glass transition temperature (Tg) of from 40 to 120°C, which monomers comprise (meth)acrylic acid, maleic anhydride, hydroxyalkyl(meth)acrylic acids, alkyl (meth)acrylates, alkylhydroxy (meth)acrylates, alkyl (meth)acrylic acids, or styrene, the polymer having a weight average molecular weight of from 25,000 to 95,000 and then b) tableting the resulting agglomerate.

The amount of phosphate builder if present may be 5 wt% or less; preferably it is from 0 to 1 wt%, and more preferably from 0 to 0.1 wt%.

It is necessary for the polymer to be neutralised in order for it to be soluble. The weight average molecular weight of the polymer is from 25,000 to 95,000, preferably from 40,000 to 50,000, and its Tg preferably between 40 and 100°C. Preferred levels in the tablet are from 0.5 to 2 wt%.

Detergent tablets made according to the invention are found to have excellent physical properties compared with known tablets having high levels of non-phosphate builders.

### EXAMPLES

| | |
|---|---|
| Dishwashing tablet formulation A | |
| (all amounts are percentages by weight) | |
| Sodium citrate dihydrate | 35 |
| Carbonate | 8 |
| Perborate | 10 |
| Tetraacetylethylenediamine (TAED) | 3 |
| Na salt of polyacrylic acid (MW 4500) | 4.5 |
| Nonionic surfactant (Plurafac LF 403) | 1 |
| Bicarbonate | 38-38.5 |
| Tableting aid | 0-0.5 |

Dishwashing tablets were formulated according to the above formulation, each containing a different tableting aid, as listed in Table I below. The tablets were then evaluated visually and also for hardness using a Schleuninger tablet tester 60. The results are given below. Hardness was evaluated after one hour's ageing, and is measured in kPa.
MMA = methyl methacrylate, MAA = methacrylic acid, BA = butyl acrylate, HEMA = hydroxyethylmethacrylate, EHA = 2-hydroxyethylacrylate

**TABLE I**

| Tableting aid | Mw | Hardness | Tg | Visual appearance |
|---|---|---|---|---|
| None* | | 0 | | Impossible to tabletise |
| 0.5% water* | | 3.5 | | Wet and crumbling |
| 47MMA/25BA/18MAA/10HEMA | 45000 | 20.5 | 95°C | Excellent |
| 47MMA/25BA/18MAA/10HEMA | 88000 | 13.0 | 98°C | Acceptable |
| 47MMA/25BA/18MAA/10HEMA* | 116000 | 5.0 | 100°C | Wet and crumbling |
| 47MMA/25BA/18MAA/10HEMA* | 148000 | 5.0 | 99°C | Very crumbling |
| 52.5MMA/29.5BA/18MAA* | 20000 | 17.0 | 80°C | Good |
| 40 Styrene/30EHA/25AN/5MAA | 55800 | 12.5 | 51°C | Acceptable |
| 80EHA/20AA* | 15000 | 11.0 | | Acceptable |
| 62BMA/38AA* | 10000 | 4.5 | | Wet and crumbling |
| Polyurethane* | | 2.5 | | Wet and crumbling |

| | | | | |
|---|---|---|---|---|
| * Not in acordance with the invention. | | | | |

"Acceptable", "Good" and "Excellent" refer to the tablet's hardness and resistance to crumbling and also to the visual impression. "Acceptable" for instance means that although a proper tablet is formed, the edges of the tablet are not very sharp and the surface is somewhat uneven.

### II - DISHWASHING TABLETS FORMULATED ACCORDING TO EP 579659A

Formulation B was prepared according to the teaching of EP 579659A, and then evaluated for its physical properties with added tableting aid. The tableting aid employed had the formulation 47MMA/25BA/18MAA/10HEMA, Mw 45000, Tg about 98°C.

| **FORMULATION B:** | |
|---|---|
| Sodium carbonate | 46.7% |
| Sodium sulphate | 1% |
| Copolymer dry* | 10.2% |
| Sodium citrate | 10.3% |
| Sodium disilicate | 20.5% |
| Sodium perborate monohydrate | 7.1% |
| TAED | 2.1% |
| Nonionic surfactant | 2.1% |

| | |
|---|---|
| *sodium salt of a copolymer of acrylic and maleic acid | |

| | **HARDNESS** | **Comments** | **Visual aspect** |
|---|---|---|---|
| FORMULATION A | tablet broken | capping | medium |
| + 0.5% water | | | |
| FORMULATION B | 15.0 | no capping | good |
| + 0.5% tableting aid | | | |

By "capping" is meant that after pressing the top and bottom surfaces of the tablet are compressed by the pressing machine to such an extent that they detach from the body of the tablet as laminar portions, the main body of the tablet being of a less solid consistency.

### III - WASHING TESTS

The above mentioned formulations were tested for performance in comparison with commercially available tablets.
Commercial tablet 1 contains:
<5% nonionic surfactant
5-15% oxygenated bleach
>30% phosphate
enzymes
Commercial tablet 2 contains:
<5% nonionic surfactant
5-15% oxygenated bleach, polycarboxylate
enzymes, carbonate, citrate, activator, perfume

Conditions : 1 tablet/wash
Soil : milk + margarine
Water : 600 ppm hardness as CaCO₃
Scale: 0 = perfect
4 = heavy filming on glasses

| DETERGENT | Commercial tablet 1 | A - no tableting aid | A + 0.5% tableting aid |
|---|---|---|---|
| QUANTITIES | 25.5 g | 23.8 g (as powder) | 23 g |
| Filming/spotting | 0/1 | 1/1 | 0/0 |
| 4 cycles | | | |
| Filming/spotting | 0.5/1 | 1.5/1.5 | 1/0 |
| 8 cycles | | | |
| Note: Formulation A does not contain enzymes which would improve performance. | | | |

### IV - DETERGENCY

Evaluations were made of wood patches impregnated with tea. Thin strips of wood, laminated on one side with plastic, were impregnated on the other side with tea, and the whiteness of the patch evaluated before and after washing.

| | Commercial 1 | Formulation A | Formulation A + 0.5% tab aid |
|---|---|---|---|
| Whiteness before washing | 77.38 | 75.56 | 76.12 |
| Whiteness after washing (higher the better) | 80.34 | 82.86 | 82.60 |
| Yellow scale before wash | 2.85 | 3.85 | 3.18 |
| Yellow scale after wash (lower the better) | 1.67 | 0.37 | 0.31 |

The above results demonstrate that the presence in the formulation of tableting aid does not have a detrimental effect on either detergency performance or bleach stability.

### V - VARIATION ON FORMULATIONS

A further detergent formulation was prepared with the composition given below, and tablets formulated with 0.5% of the tableting aid were evaluated for hardness.

| | **C** |
|---|---|
| Citrate | 20% |
| Carbonate | 8% |
| Perborate | 10% |
| TAED | 3% |
| Homopolymer | 4.5% |
| Nonionic surfactant | 1% |
| Bicarbonate | 53.5% |
| Disilicate | 0 |

### Results : tablets' hardness after ageing for 1 hour

| **Formulation** | **Hardness (kPa)** |
|---|---|
| A + 0.25% Tableting Aid | 12 |
| A + 0.5% Tableting Aid | 19 |
| B + 0.5% Tableting Aid | 20 |
| C + 0.5% Tableting Aid | 18 |

### VI - DISSOLUTION RATES

Tablets were placed in a wire basket in a typical glass fronted dishwasher, and the time to dissolve completely during a typical washing cycle observed visually.

| | |
|---|---|
| Commercial 1 | 22 minutes |
| Commercial 2 | 33 minutes |
| Formulation B | 27 minutes |
| Formulation A + T.Aid | 24 minutes |
| Formulation B + T.Aid | 21 minutes |

Commercial tablets 1 and 2 start dissolving a little later and then fall apart suddenly when wet. Formulations A + Tableting Aid and B + Tableting Aid dissolve more regularly from the early beginning to the end of wash cycles.

## Claims

1. Detergent tablet which comprises at least 50 wt% of a non-phosphate builder and from 0 to 20 wt% of a phosphate builder, having incorporated therein as a binder from 0.3 to 5 wt% of a neutralised polymer of hydrophilic or hydrophobic monomers which has a glass transition temperature (Tg) of from 40 to 120°C, which monomers comprise (methyl)acrylic acid, maleic anhydride, hydroxyalkyl(meth)acrylic acids, alkyl (meth)acrylates, alkylhydroxy (meth)acrylates, alkyl (meth)acrylic acids or styrene, the polymer having a weight average molecular weight of from 25,000 to 95,000.

2. Process for producing a detergent tablet which comprises the steps of a) agglomerating a composition comprising at least 50 wt% of a non-phosphate builder, optionally up to 20 wt% of a phosphate builder, and from 0.3 to 5 wt% of a neutralised polymer of hydrophilic or hydrophobic monomers which has a glass transition temperature (Tg) of from 40 to 120°C, which monomers comprise (meth)acrylic acid, maleic anhydride, hydroxyalkyl(meth)acrylic acids, alkyl (meth)acrylates alkylhydroxy (meth)acrylates, alkyl (meth)acrylic acids or styrene, the polymer having a weight average molecular weight of from 25,000 to 95,000; and then b) tableting the resulting agglomerate.

3. Process or tablet according to claim 1 or 2, wherein the polymer has a weight average molecular weight of from 40,000 to 50,000.

4. Process or tablet according to any preceding claim wherein the amount of phosphate builder is from 0 to 5 wt%.

5. Process or tablet according to claim 4 wherein the amount of phosphate builder is from 0 to 1 wt%, preferably from 0 to 0.1 wt%.

6. Process or tablet according to any preceding claim, wherein the polymer has a Tg of between 40 and 100°C.

7. Process or tablet according to any preceding claim, wherein the polymer comprises units of methyl methacrylate, butyl acrylate, methacrylic acid, hydroxyethylmethacrylate or 2-hydroxyethylacrylate.

8. Process or tablet according to any preceding claim, wherein the polymer comprises 47 wt% methyl methacrylate, 25 wt% butyl acrylate, 18 wt% methacrylic acid, and 10 wt%, hydroxyethylmethacrylate.

9. Process or tablet according to any preceding claim, wherein the inorganic builder comprises silicate, disilicate, zeolite, carbonate or bicarbonate.

## Patentansprüche

1. Reinigungsmitteltablette, welche mindestens 50 Gew.-% eines Nicht-Phosphat-Aufbaustoffes und von 0 bis 20 Gew.-% eines Phosphat-Aufbaustoffes und darin eingebracht als ein Bindemittel von 0,3 bis 5 Gew.-% eines neutralisierten Polymers von hydrophilen oder hydrophoben Monomeren, das eine Glasübergangstemperatur (Tg) von 40 bis 120°C aufweist, umfaßt, wobei die Monomere (Meth)acrylsäure, Maleinsäureanhydrid, Hydroxyalkyl(meth)acrylsäure, Alkyl(meth)acrylate, Alkylhydroxy(meth)-acrylate, Alkyl(meth)acrylsäuren oder Styrol umfassen, und wobei das Polymer ein Gewichtsmittel des Molekulargewichts von 25.000 bis 95.000 aufweist.

2. Verfahren zur Herstellung einer Reinigungsmitteltablette, welches die Schritte a) des Agglomerierens einer Zusammensetzung, umfassend mindestens 50 Gew.-% eines Nicht-Phosphat-Aufbaustoffes, gegebenenfalls bis zu 20 Gew.-% eines Phosphat-Aufbaustoffes und von 0,3 bis 5 Gew.-% eines neutralisierten Polymers von hydrophilen oder hydrophoben Monomeren, welches eine Glasübergangstemperatur (Tg) von 40 bis 120°C aufweist und wobei die Monomere (Meth)acrylsäure, Maleinsäureanhydrid, Hydroxyalkyl(meth)acrylsäuren, Alkyl(meth)acrylate, Alkylhydroxy(meth)acrylate, Alkyl(meth)acrylsäuren oder Styrol umfassen und das Polymer ein Gewichtsmittel des Molekulargewichts von 25.000 bis 95.000 aufweist, und dann d) des Tablettieren des resultierenden Agglomerats umfaßt.

3. Verfahren oder Tablette gemäß Anspruch 1 oder 2, wobei das Polymer ein Gewichtsmittel des Molekulargewichts von 40.000 bis 50.000 aufweist.

4. Verfahren oder Tablette gemäß einem vorhergehenden Anspruch, wobei die Menge des Phosphat-Aufbaustoffes von 0 bis 5 Gew.-% beträgt.

5. Verfahren oder Tablette gemäß Anspruch 4, wobei die Menge des Phosphat-Aufbaustoffes von 0 bis 1 Gew.-%, vorzugsweise von 0 bis 0,1 Gew.-%, beträgt.

6. Verfahren oder Tablette gemäß einem vorhergehenden Anspruch, wobei das Polymer eine Tg von zwischen 40 und 100°C aufweist.

7. Verfahren oder Tablette gemäß einem vorhergehenden Anspruch, wobei das Polymer Einheiten von Methylmethacrylat, Butylacrylat, Methacrylsäure, Hydroxyethylmethacrylat oder 2-Hydroxyethylacrylat umfaßt.

8. Verfahren oder Tablette gemäß einem vorhergehenden Anspruch, wobei das Polymer 47 Gew.-% Methylmethacrylat, 25 Gew.-% Butylacrylat, 18 Gew.-% Methacrylsäure und 10 Gew.-% Hydroxyethylmethacrylat umfaßt.

9. Verfahren oder Tablette gemäß einem vorhergehenden Anspruch, wobei der anorganische Aufbaustoff Silikat, Disilikat, Zeolith, Carbonat oder Bicarbonat umfaßt.

## Revendications

1. Tablette détergente qui comprend au moins 50 % en poids d'un adjuvant de type non phosphate et 0 à 20 % en poids d'un adjuvant de type phosphate, incorporant comme liant 0,3 à 5 % en poids d'un polymère neutralisé de monomères hydrophiles ou hydrophobes qui a une température de transition vitreuse (Tg) de 40 à 120°C, ces monomères comprenant l'acide (méth)acrylique, l'anhydride maléique, les acides hydroxy-alkyl(méth)acryliques, les (méth)acrylates d'alkyle, les (méth)acrylates d'hydroxyalkyle, les acides alkyl(méth)acryliques ou le styrène, le polymère ayant une masse moléculaire moyenne en poids de 25 000 à 95 000.

2. Procédé de préparation d'une tablette détergente qui comprend les étapes consistant à : a) agglomérer une composition comprenant au moins 50 % en poids d'un adjuvant de type non phosphate, en option jusqu'à 20 % en poids d'un adjuvant de type phosphate, et 0,3 à 5 % en poids d'un polymère neutralisé de monomères hydrophiles ou hydrophobes qui a une température de transition vitreuse (Tg) de 40 à 120°C, ces monomères comprenant l'acide (méth)acrylique, l'anhydride maléique, les acides hydroxy-alkyl(méth)acryliques, les (méth)acrylates d'alkyle, les (méth)acrylates d'hydroxyalkyle, les acides alkyl(méth)acryliques ou le styrène, le polymère ayant une masse moléculaire moyenne en poids de 25 000 à 95 000; et ensuite b) former une tablette avec l'agglomérat résultant.

3. Procédé ou tablette selon la revendication 1 ou 2, dans lequel le polymère a une masse moléculaire moyenne en poids de 40 000 à 50 000.

4. Procédé ou tablette selon l'une quelconque des revendications précédentes, dans lequel la quantité d'adjuvant de type phosphate est 0 à 5 % en poids.

5. Procédé ou tablette selon la revendication 4, dans lequel la quantité d'adjuvant de type phosphate est 0 à 1 % en poids, de préférence 0 à 0,1 % en poids.

6. Procédé ou tablette selon l'une quelconque des revendications précédentes, dans lequel le polymère a une Tg entre 40 et 100°C.

7. Procédé ou tablette selon l'une quelconque des revendications précédentes, dans lequel le polymère comprend des unités méthacrylate de méthyle, acrylate de butyle, acide méthacrylique, méthacrylate d'hydroxyéthyle ou acrylate de 2-hydroxyéthyle.

8. Procédé ou tablette selon l'une quelconque des revendications précédentes, dans lequel le polymère comprend 47 % en poids de méthacrylate de méthyle, 25 % en poids d'acrylate de butyle, 18 % en poids d'acide méthacrylique, et 10 % en poids de méthacrylate d'hydroxyéthyle.

9. Procédé ou tablette selon l'une quelconque des revendications précédentes, dans lequel l'adjuvant minéral comprend un silicate, un disilicate, une zéolite, un carbonate ou un bicarbonate.
